# FASCICULE DE BREVET EUROPEEN

(11) **EP 1 951 095 B1**
(45) Date de publication et mention de la délivrance du brevet: **29.07.2009**
(21) Numéro de dépôt: 06831156.2
(22) Date de dépôt: 22.11.2006
(51) Int. Cl.: A47J 45/07

(54) **COUVERCLE AVEC ORGANE DE PREHENSION AIMANTE**
DECKEL MIT MAGNETISCHER DECKELGREIFVORRICHTUNG
LID WITH MAGNETIC LID GRIPPER

(30) Priorité: 23.11.2005 FR 0511873
(43) Date de publication de la demande: 06.08.2008
(73) Titulaire: SEB SA, 69130 Ecully (FR)
(72) Inventeur: LORTHIOIR, Christophe, F-74150 Bloye (FR)
(74) Mandataire: Pichat, Thierry
(86) Numéro de dépôt international: PCT/FR2006/002568
(87) Numéro de publication internationale: WO 2007/060326

(56) Documents cités:
- WO-A-03/019583
- GB-A- 937 397
- GB-A- 2 211 356
- US-A- 2 731 663

## Description

La présente invention concerne un couvercle d'ustensile de cuisine, par exemple d'une casserole.

On connaît un couvercle du type comprenant un capot adapté à recouvrir l'article culinaire et un organe de préhension amovible fixé au capot par l'action d'un aimant sur une pièce magnétisable. Un tel couvercle est décrit dans le document US 2731663 A.

Cependant la détermination de la puissance de l'aimant est problématique : si elle est trop faible, la solidarisation du capot à l'organe de préhension peut présenter des défaillances, et, si elle est trop importante, il peut être difficile pour l'utilisateur de désolidariser le capot de l'organe de préhension. A cet inconvénient s'ajoute le fait que, quelle que soit la puissance de l'aimant, pour pouvoir désolidariser l'organe de préhension, l'utilisateur doit exercer une force de traction sur l'organe de préhension et une force d'appui sur le capot, ce qui limite cette manipulation quand le couvercle est chaud.

La présente invention vise à palier les inconvénients précités.

Selon l'invention, le couvercle du type précité comprend un capot adapté à recouvrir l'ustensile culinaire et un organe de préhension amovible adapté à être fixé au capot par l'action d'un aimant sur une pièce magnétisable, l'organe de préhension comprenant un socle et un organe de manoeuvre mobile par rapport au socle entre une position de magnétisation dans laquelle la force exercée par l'aimant sur la pièce magnétisable permet de solidariser l'organe de préhension au capot, et une position d'isolation dans laquelle cette force est insuffisante pour permettre la solidarisation de l'organe de préhension au capot.

D'autres particularités et avantages apparaîtront dans la description des quatre modes de réalisation donnés à titre d'exemples non limitatifs et illustrés par les dessins dans lesquels :
La figure 1 est une vue en coupe d'un organe de préhension conforme à un premier mode de réalisation,
La figure 2 est une vue en coupe d'un organe de préhension conforme à un second mode de réalisation,
La figure 3 est une vue en perspective écorchée de l'organe de préhension conforme au second mode de réalisation,
La figure 4 est une vue en perspective d'un organe de préhension conforme à un troisième mode de réalisation,
La figure 5 est une vue en perspective éclatée de l'organe de préhension conforme au troisième mode de réalisation,
La figure 6 est une vue en coupe de l'organe de préhension conforme au troisième mode de réalisation selon la ligne VI-VI de la figure 4,
La figure 7 est une vue en coupe d'un organe de préhension conforme à un quatrième mode de réalisation, et
La figure 8 est une vue en perspective éclatée de l'organe de préhension conforme au quatrième mode de réalisation.

Un couvercle pour ustensile culinaire comprend typiquement, d'une part, un capot qui est adapté à recouvrir l'ustensile culinaire et, d'autre part, un organe de préhension 1 qui est adapté à faciliter la préhension du couvercle par un utilisateur. En outre, dans les quatre modes de réalisation, le couvercle comprend, d'une part, un aimant 2 qui est porté par l'organe de préhension 1, et d'autre part, une pièce magnétisable qui est portée par le capot, permettant ainsi à l'organe de préhension 1 d'être fixé de façon amovible au capot par l'action de l'aimant 2 sur la pièce magnétisable.

Par ailleurs, l'organe de préhension 1 comprend un socle 3 et un organe de manoeuvre 4. Le socle 3 forme le corps de l'organe de préhension 1 et il permet à l'utilisateur de saisir ce dernier (ainsi que le capot quand il y est solidarisé). L'organe de manoeuvre 4 est mobile par rapport au socle 3 et il permet à l'utilisateur de désolidariser l'organe de préhension 1 du capot. L'organe de manoeuvre 4 est mobile entre une position de magnétisation dans laquelle la force exercée par l'aimant 2 sur la pièce magnétisable permet la solidarisation de l'organe de préhension 1 au capot, et une position d'isolation dans laquelle cette force est insuffisante pour permettre la solidarisation de l'organe de préhension 1 au capot (et permet donc la séparation de ces deux pièces).

Par ailleurs, dans les trois premiers modes de réalisation, l'organe de préhension 1 comprend un organe de rappel 5 (en l'occurrence un ressort 5) sollicitant l'organe de manoeuvre 4 dans sa position de magnétisation. De ce fait, dans les quatre modes de réalisation, l'utilisateur doit entraîner l'organe de manoeuvre 4 de sa position de magnétisation à sa position de libération, et, dans le quatrième mode de réalisation, il doit également entraîner l'organe de manoeuvre 4 de sa position de libération à sa position de magnétisation.

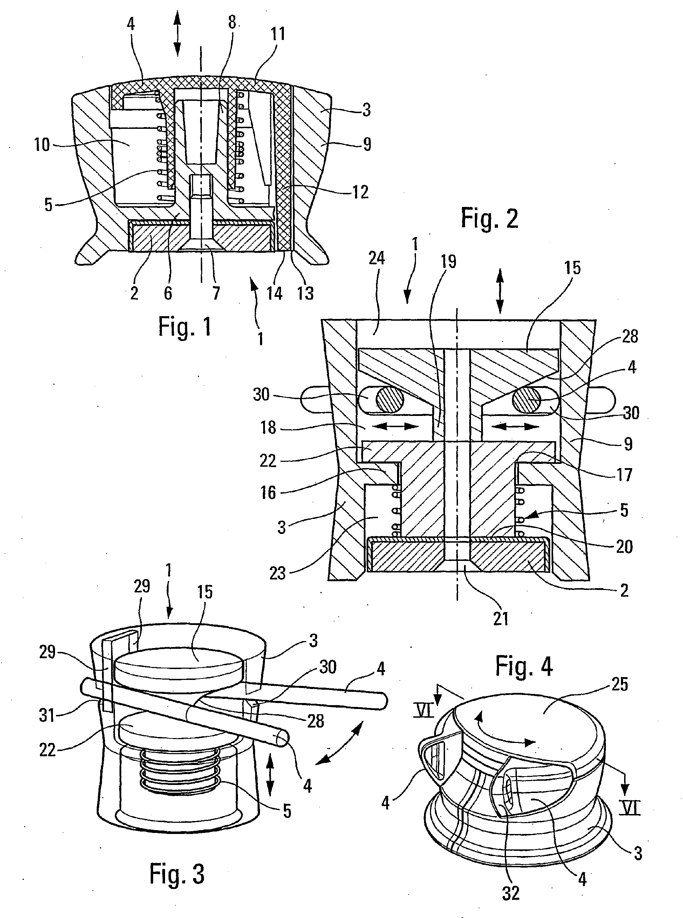

Comme on peut le voir à la figure 1, dans le premier mode de réalisation, l'aimant 2 est porté par le socle 3.

Le socle 3 comprend une paroi de fond 6 qui fait face au capot quand l'organe de préhension 1 y est fixé et à laquelle l'aimant 2 est fixé par une vis 7. Le socle 3 comprend également une colonne centrale 8 qui fait saillie de façon sensiblement perpendiculaire de la paroi de fond 6 et dans laquelle est réalisée l'orifice de réception de la vis 7. Le socle 3 comprend également une paroi périphérique 9 de forme sensiblement cylindrique et qui fait saillie de façon sensiblement perpendiculaire de la paroi de fond 6.

La paroi de fond 6, la colonne centrale 8 et la paroi périphérique 9 définissent un logement 10 pour, d'une part, l'organe de manoeuvre 4 qui est formé par un bouton poussoir 4 dont la paroi supérieure 11 porte la surface de commande manuelle, et, d'autre part, le ressort 5 qui s'étend entre la paroi de fond 6 du socle 3 et la paroi supérieure 11 de l'organe de manoeuvre 4. L'organe de manoeuvre 4 est monté coulissant dans le logement selon la direction définie par la colonne centrale 8.

Par ailleurs, l'organe de manoeuvre 4 comporte un organe de butée 12 (en l'occurrence une patte 12) qui s'étend le long de la paroi périphérique 9 du socle 3 depuis la paroi supérieure 11, et traverse la paroi de fond 6 du socle 3 au niveau d'une ouverture 13. L'organe de butée 12 est suffisamment long de sorte que son extrémité libre 14 vienne en butée contre une surface d'appui portée par le capot quand l'organe de manoeuvre 4 passe de sa position de magnétisation à sa position de libération, et écarte le socle 3 du capot (et donc l'aimant 2 de la pièce magnétisable) quand l'organe de manoeuvre 4 est dans sa position de libération.

Ainsi, dans le premier mode de réalisation, le déplacement de l'organe de manoeuvre 4 de l'une à l'autre de ses positions entraîne une modification de la distance séparant l'aimant 2 de la pièce magnétisable (et donc une modification de l'intensité de la force magnétique exercée sur la pièce magnétisable).

Comme on peut le voir aux figures 2 à 6, dans les second et troisième modes de réalisation, l'aimant 2 est porté par un plot 15 qui est monté mobile par rapport au socle 3 et qui est entraîné par l'organe de manoeuvre 4 entre une position de magnétisation dans laquelle l'organe de manoeuvre 4 est dans sa position de magnétisation, et une position de libération dans laquelle la force exercée par l'aimant 2 sur la pièce magnétisable est insuffisante pour permettre la solidarisation de l'organe de préhension 1 au capot.

Comme dans le premier mode de réalisation, le socle 3 comprend une paroi périphérique 9 de forme sensiblement cylindrique et un épaulement annulaire intérieur 16 qui s'étend de façon sensiblement perpendiculaire à l'axe de révolution de la paroi périphérique 9. Par ailleurs, l'épaulement annulaire intérieur 16 comprend une ouverture 17.

La paroi périphérique 9 et l'épaulement annulaire intérieur 16 définissent un logement 18 pour, d'une part, le plot 15 qui s'étend dans le socle 3 et traverse l'épaulement annulaire intérieur 16 au niveau de l'ouverture 17, et, d'autre part, le ressort 5.

Le plot 15 comprend une colonne centrale 19 qui traverse l'ouverture 17 et définit sa direction de translation dans le socle 3. La colonne centrale 19 comprend une extrémité inférieur 20 à laquelle l'aimant 2 est fixé par une vis 21 vissée dans un logement porté par la colonne centrale 19. Le plot 15 comprend également un épaulement extérieur 22 qui est adapté à venir en butée contre l'épaulement annulaire intérieur 16 quand l'organe de manoeuvre 4 est dans sa position de magnétisation et à définir ainsi la position de magnétisation du plot 15.

L'épaulement annulaire intérieur 16 et la paroi périphérique 9 du socle 3 définissent un premier logement 23 qui est situé d'un premier côté de l'épaulement annulaire intérieur 16 et dans lequel sont logés l'extrémité inférieure 20 et l'aimant 2. L'épaulement annulaire intérieur 16 et la paroi périphérique 9 du socle 3 définissent un second logement 24 qui est disposé de l'autre côté de l'épaulement annulaire intérieur 16 et dans lequel est logé l'épaulement extérieur 22 du plot 15. Dans le second mode de réalisation, le ressort 5 est logé dans le premier logement 23, il s'étend entre l'aimant 2 et l'épaulement annulaire intérieur 16 du socle 3 et il sollicite le plot 15 dans sa position de magnétisation. Dans le troisième mode de réalisation, le ressort 5 est logé dans le second logement 24, il s'étend entre un capot 25 qui est solidarisé au socle 3 par l'intermédiaire de vis 26, et l'extrémité supérieure 27 du plot 15 et il sollicite le plot 15 dans sa position de magnétisation.

Le plot 15 comprend également une surface de came 28 qui, dans les deuxième et troisième modes de réalisation, est disposée dans le second logement 24, et qui est adaptée à coopérer avec l'organe de manoeuvre 4 relié au socle 3 de sorte que, quand l'organe de manoeuvre 4 passe de sa position de magnétisation à sa position de libération, il entraîne le plot 15 de sa position de magnétisation à sa position de libération.

Dans le présent mode de réalisation, l'organe de manoeuvre 4 est formé par deux éléments 4 qui sont montés pivotants par rapport au socle 3 selon un axe sensiblement parallèle à l'axe de révolution de la paroi périphérique 9 du socle 3. Chaque élément 4 est relié au socle 3 par un arbre 29 qui définit l'axe de pivotement et est conformé de façon à venir prendre appui contre la surface de came 28. De.ce fait, dans les deux modes de réalisation précités, le rapprochement des deux éléments 4 l'un de l'autre par pivotement autour de leur axe de pivotement entraîne la translation du plot 15. De plus, le socle 3 comprend dans sa paroi périphérique 9 une ouverture de guidage 30 qui impose leurs mouvements aux deux éléments 4 et qui, de ce fait, limite les efforts de torsion au niveau des arbres 29 et donc permet de transmettre efficacement le mouvement au plot 15.

Ainsi, dans les second et troisième modes de réalisation, le déplacement de l'organe de manoeuvre 4 de l'une à l'autre de ses positions entraîne une modification de la distance séparant l'aimant 2 de la pièce magnétisable (et donc une modification de l'intensité de la force magnétique exercée sur la pièce magnétisable).

Dans le second mode de réalisation, chaque élément 4 est formé par une tige 4, l'arbre 29 qui y est associé étant disposé dans une cavité d'ancrage 31 réalisée dans la paroi périphérique 9 et disposée sensiblement à l'opposé de l'ouverture de guidage 30 par rapport à l'axe de révolution du socle 3.

Dans le troisième mode de réalisation, chaque élément 4 est formé par un aileron 32 qui est porté par un arc 33. L'arc 33, excentré par rapport à l'axe de pivotement de l'élément 4, est adapté à venir en butée contre la surface de came 28 du plot 15. Dans ce mode de réalisation, les arbres 29 sont portés par l'épaulement annulaire intérieur 16.

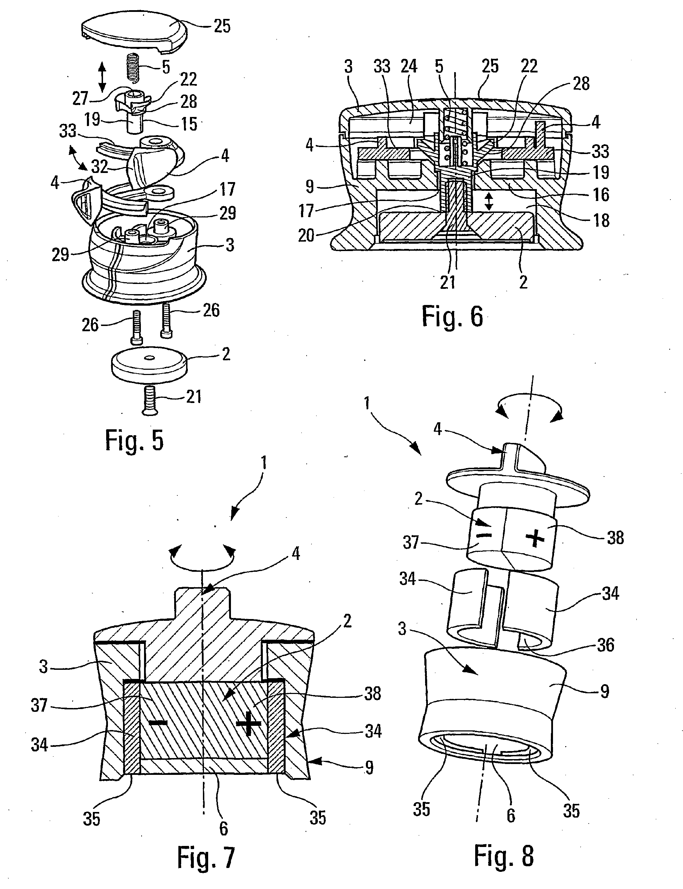

Comme on peut le voir aux figures 7 et 8, dans le quatrième mode de réalisation, l'aimant 2 est porté par l'organe de manoeuvre 4.

Le socle 3 comprend une paroi de fond 6 qui fait face au capot quand l'organe de préhension 1 y est fixé, et une paroi périphérique 9 de forme sensiblement cylindrique faisant saillie de façon sensiblement perpendiculaire de la paroi de fond 6.

Le socle 3 comprend également deux organes de transmission 34 qui sont en un matériau magnétisable, comme de l'acier doux. Chaque organe de transmission 34 s'étend le long de la paroi périphérique 9, et traverse la paroi de fond 6 au niveau d'une ouverture 35 de façon à être en contact ou à proximité immédiate de la pièce magnétisable porté par le capot. L'intérieur du socle 3 définit un logement 36 pour, d'une part, l'organe de manoeuvre 4 qui y est monté rotatif selon l'axe de révolution de la paroi périphérique 9, et, d'autre part, l'aimant 2 qui est fixé à l'organe de manoeuvre 4. Le logement 36 est délimité axialement par la paroi de fond 6 et qui isole magnétiquement l'aimant 2 de la pièce magnétisable porté par le capot. Le logement 36 est délimité radialement, d'une part, par les deux organes de transmission 34, et, d'autre part, par les deux portions de la paroi périphérique 9 qui séparent les deux organes de transmission 34 l'un de l'autre.

L'aimant 2 de forme cylindrique complémentaire de la forme du logement 36 est polarisé de sorte que quand, l'organe de manoeuvre 4 est dans sa position de magnétisation, chaque pôle 37, 38 de l'aimant 2 est en contact avec un seul organe de transmission 34 afin que ces derniers transmettent à l'élément magnétisable le flux magnétique généré par l'aimant 2, et, quand l'organe de manoeuvre 4 est dans sa position de libération, chaque pôle 37, 38 de l'aimant 2 est en contact avec les deux organes de transmission 34 afin de court-circuiter le circuit magnétique. Dans le présent mode de réalisation, l'organe de manoeuvre 4 passe d'une position de magnétisation à une position de libération et d'une position de libération à une position de magnétisation par une rotation d'un quart de tour.

Ainsi, dans le quatrième mode de réalisation, le déplacement de l'organe de manoeuvre 4 de l'une à l'autre de ses positions entraîne une modification de la circulation du flux magnétique.

Comme on peut le voir aux différentes figures, dans tous les modes de réalisation, l'organe de préhension 1 ne comprend qu'un seul aimant 2.

De nombreuses modifications peuvent être apportées aux modes de réalisation décrits.

Ainsi, l'aimant 2 pourrait être porté par le capot et la pièce magnétisable par l'organe de préhension 1.

En outre, dans le second mode de réalisation, la surface de came 25, au lieu d'être portée par le plot 15, pourrait être portée par le socle 3, l'organe de manoeuvre 4 étant alors relié au plot 15.

Dans le quatrième de mode de réalisation, les deux organes de transmission 31, 32, au lieu de s'étendre angulairement chacun sur quasiment une moitié de cylindre, pourraient s'étendre sur un secteur angulaire beaucoup plus restreint de sorte que, quand l'organe de manoeuvre 4 passerait dans sa position de libération, chaque pôle de l'aimant 2 serait en contact avec aucun des deux organes de transmission 31, 32, ce qui court-circuiterait également le circuit magnétique.

Il serait également possible que l'organe de préhension comprenne plusieurs aimants qui seraient alors tous totalement solidaires en mouvement les uns des autres.

## Revendications

1. Couvercle d'ustensile culinaire comprenant un capot adapté à recouvrir l'ustensile culinaire et un organe de préhension (1) amovible adapté à être fixé au capot par l'action d'un aimant (2) sur une pièce magnétisable, **caractérisé en ce que** l'organe de préhension (1) comprend un socle (3) et un organe de manoeuvre (4) mobile par rapport au socle (3) entre une position de magnétisation dans laquelle la force exercée par l'aimant (2) sur la pièce magnétisable permet de solidariser l'organe de préhension (1) au capot, et une position d'isolation dans laquelle cette force est insuffisante pour permettre la solidarisation de l'organe de préhension (1) au capot.

2. Couvercle selon la revendication 1, **caractérisé en ce que** l'organe de préhension (1) porte l'aimant (2).

3. Couvercle selon la revendication 2, **caractérisé en ce que** l'aimant (2) est porté par le socle (3).

4. Couvercle selon la revendication 2, **caractérisé en ce que** l'aimant (2) est porté par un plot (15) mobile par rapport au socle (3) et entraîné par l'organe de manoeuvre (4) entre une position de magnétisation dans laquelle l'organe de manoeuvre (4) est dans sa position de magnétisation, et une position de libération dans laquelle la force exercée par l'aimant (2) sur la pièce magnétisable est insuffisante pour permettre la solidarisation de l'organe de préhension (1) au capot.

5. Couvercle selon la revendication 2, **caractérisé en ce que** l'aimant (2) est porté par l'organe de manoeuvre (4).

6. Couvercle selon l'une des revendications 1 à 5, **caractérisé en ce que** l'organe de préhension (1) comprend un ressort (5) sollicitant l'organe de manoeuvre (4) dans sa position de magnétisation.

7. Couvercle selon l'une des revendications 1 à 6, **caractérisé en ce que** le déplacement de l'organe de manoeuvre (4) de l'une à l'autre de ses positions entraîne une modification de la distance entre l'aimant (2) et la pièce magnétisable.

8. Couvercle selon l'une des revendications 1 à 6, **caractérisé en ce que** le déplacement de l'organe de manoeuvre (4) de l'une à l'autre de ses positions entraîné une modification de la circulation du flux magnétique.

9. Couvercle selon la revendication 7 dépendante de la revendication 3 ou de l'une des revendications qui en dépendent, **caractérisé en ce que** l'organe de manoeuvre (4) porte un organe de butée (12) adapté à venir en butée contre une surface d'appui portée par le capot de sorte que quand l'organe de manoeuvre (4) passe de sa position de magnétisation à sa position de libération, la mise en butée de l'organe de butée (12) entraîne l'écartement du socle (3) du capot.

10. Couvercle selon la revendication 7 dépendante de la revendication 4 ou de l'une des revendications qui en dépendent, **caractérisé en ce que** le plot (15) comprend une surface de came (28) adaptée à coopérer avec l'organe de manoeuvre (4) de sorte que quand l'organe de manoeuvre (4) passe de sa position de magnétisation à sa position de libération, il entraîne le plot (15) de sa position de magnétisation à sa position de libération.

11. Couvercle selon la revendication 8 dépendante de la revendication 5 ou de l'une des revendications qui en dépendent, **caractérisé en ce que** le socle (3) comprend deux organes de transmission (34) magnétisables qui sont sans contact l'un avec l'autre, et **en ce que** l'aimant (2) qui est magnétiquement isolé de la pièce magnétisable, est polarisé et disposé dans le socle (3) de sorte que, quand l'organe de manoeuvre (4) est dans sa position de magnétisation, chaque pôle (37, 38) de l'aimant (2) est en contact avec un seul organe de transmission (34) afin que ces derniers transmettent à l'élément magnétisable le flux magnétique généré par l'aimant (2), et, quand l'organe de manoeuvre (4) est dans sa position de libération, chaque pôle (37, 38) est en contact soit avec les deux organes de transmission (34), soit avec aucun des deux.

## Claims

1. Culinary utensil lid comprising a cover adapted to cover the culinary utensil and a removable gripping member (1) adapted to be fixed to the cover by the action of a magnet (2) on a magnetisable piece, **characterised in that** the gripping member (1) comprises a base (3) and a manoeuvring member (4) able to move with respect to the base (3) between a magnetisation position in which the force exerted by the magnet (2) on the magnetisable piece makes it possible to secure the gripping member (1) to the cover, and an isolation position in which this force is insufficient to allow the fixing of the gripping member (1) to the cover.

2. Lid according to claim 1, **characterised in that** the gripping member (1) carries the magnet (2).

3. Lid according to claim 2, **characterised in that** the magnet (2) is carried by the base (3).

4. Lid according to claim 2, **characterised in that** the magnet (2) is carried by a stud (15) able to move with respect to the base (3) and driven by the manoeuvring member (4) between a magnetisation position in which the manoeuvring member (4) is in its magnetisation position and a release position in which the force exerted by the magnet (2) on the magnetisable piece is insufficient to enable the gripping member (1) to be secured to the cover.

5. Lid according to claim 2, **characterised in that** the magnet (2) is carried by the manoeuvring member (4).

6. Lid according to one of claims 1 to 5, **characterised in that** the gripping member (1) comprises a spring (5) pushing the manoeuvring member (4) into its magnetisation position.

7. Lid according to one of claims 1 to 6, **characterised in that** the movement of the manoeuvring member (4) from one of its positions to the other causes a modification to the distance between the magnet (2) and the magnetisable piece.

8. Lid according to one of claims 1 to 6, **characterised in that** the movement of the manoeuvring member (4) from one of its positions to the other causes a modification to the circulation of the magnetic flux.

9. Lid according to claim 7 dependent on claim 3 or one of the claims that are dependent on it, **characterised in that** the manoeuvring member (4) carries a stop member (12) adapted to come into abutment against a support surface carried by the cover so that, when the manoeuvring member (4) passes from its magnetisation position to its release position, putting the abutment member (12) in abutment causes the base (3) to separate from the cover.

10. Lid according to claim 7 dependent on claim 4 or one of the claims that are dependent on it, **characterised in that** the stud (15) comprises a cam surface (28) adapted to cooperate with the manoeuvring member (4) so that, when the manoeuvring member (4) passes from its magnetisation position to its release position, it drives the stud (15) from its magnetisation position to its release position.

11. Lid according to claim 8 dependent on claim 5 or one of the claims that are dependent on it, **characterised in that** the base (3) comprises two magnetisable transmission members (34) that are without contact with each other, and **in that** the magnet (2), which is magnetically isolated from the magnetisable piece, is biased and disposed in the base (3) so that, when the manoeuvring member (4) is in its magnetisation position, each pole (37, 38) of the magnet (2) is in contact with a single transmission member (34) so that they transmit to the magnetisable element the magnetic flux generated by the magnet (2) and, when the manoeuvring member (4) is in its release position, each pole (37, 38) is in contact either with the two transmission members (34) or with neither of the two.

## Patentansprüche

1. Deckel für Küchengerät umfassend eine Haube, die zum Abdecken eines Küchengerätes eingerichtet ist, und eine versetzbare Greifvorrichtung (1), die zur Befestigung an der Haube mittels der Wirkung eines Magneten (2) auf ein magnetisierbares Bauteil eingerichtet ist, **dadurch gekennzeichnet, dass** die Greifvorrichtung (1) einen Sockel (3) und ein Betätigungsorgan (4) aufweist, welches relativ zu dem Sockel (3) zwischen einer Magnetisierstellung, in der die von dem Magneten (2) ausgeübte Kraft auf das magnetisierbare Bauteil das Befestigen der Greifvorrichtung (1) an der Haube ermöglicht, und einer Isolierstellung beweglich ist, in welcher die besagte Kraft unzureichend zum Befestigen der Greifvorrichtung (1) am Deckel ist.

2. Deckel nach Anspruch 1, **dadurch gekennzeichnet, dass** die Greifvorrichtung (1) den Magneten (2) trägt.

3. Deckel nach Anspruch 2, **dadurch gekennzeichnet, dass** der Magnet (2) von dem Sockel (3) getragen ist.

4. Deckel nach Anspruch 2, **dadurch gekennzeichnet, dass** der Magnet (2) von einem Stopfen (15) getragen ist, der relativ zum Sockel (3) beweglich ist und von dem Betätigungsorgan (4) zwischen einer Magnetisierstellung, in welcher das Betätigungsorgan (4) in seiner Magnetisierstellung ist, und einer Freigabestellung beweglich ist, in welcher die von dem Magneten (2) ausgeübte Kraft auf das magnetisierbare Bauteil unzureichend ist, um das Befestigen der Greifvorrichtung (1) an der Haube zu ermöglichen.

5. Deckel nach Anspruch 2, **dadurch gekennzeichnet, dass** der Magnet (2) von dem Betätigungsorgan (4) getragen ist.

6. Deckel nach einem der Ansprüche 1 bis 5, **dadurch gekennzeichnet, dass** die Greifvorrichtung (1) eine Feder (5) umfasst, welche das Betätigungsorgan (4) in seine Magnetisierstellung drängt.

7. Deckel nach einem der Ansprüche 1 bis 6, **dadurch gekennzeichnet, dass** die Verlagerung des Betätigungsorgans (4) von seiner einen in die andere Stellung eine Veränderung des Abstandes zwischen dem Magneten (2) und dem magnetisierbaren Bauteil erzeugt.

8. Deckel nach einem der Ansprüche 1 bis 6, **dadurch gekennzeichnet, dass** die Verlagerung des Betätigungsorgans (4) von seiner einen in die andere Stellung eine Veränderung der Zirkulation des Magnetflusses erzeugt.

9. Deckel nach Anspruch 7 in Verbindung mit Anspruch 3 oder einem davon abhängigen Anspruch, **dadurch gekennzeichnet, dass** das Betätigungsorgan (4) ein Anschlagorgan (12) umfasst, welches in Anlage an eine Abstützfläche kommen kann, die von der Haube getragen wird, derart, dass beim Verlagern des Betätigungsorgans (4) aus seiner Magnetisierstellung in seine Freigabestellung das Anlaufen des Anschlagorgans (12) ein Entfernen des Sockels 3 von der Haube bewirkt.

10. Deckel nach Anspruch 7 in Verbindung mit Anspruch 4 oder einem davon abhängigen Anspruch, **dadurch gekennzeichnet, dass** der Stopfen (15) eine Nockenoberfläche (28) aufweist, die dazu eingerichtet ist, mit dem Betätigungsorgan (4) derart zusammen zu wirken, dass das Betätigungsorgan (4) beim Verlagern aus seiner Magnetisierstellung in seine Freigabestellung den Stopfen (15) aus seiner Magnetisierstellung in seine Freigabestellung treibt.

11. Deckel nach Anspruch 8 in Verbindung mit Anspruch 5 oder einem davon abhängigen Anspruch, **dadurch gekennzeichnet, dass** der Sockel (3) zwei miteinander nicht in Kontakt stehende, magnetisierbare Treiborgane (34) aufweist, und dass der von dem magnetisierbaren Bauteil isolierte Magnet (2) in dem Sockel (3) polarisiert und in dem Sockel (3) derart angeordnet ist, dass dann, wenn das Betätigungsorgan (4) in seiner Magnetisierstellung ist, jeder Pol (37, 38) des Magneten (2) in Kontakt mit einem einzigen Treiborgan (34) steht, damit diese letzteren auf das magnetisierbare Bauteil den von dem Magneten (2) erzeugten magnetischen Fluss übertragen, und dass dann, wenn das Betätigungsorgan (4) in seiner Freigabestellung steht, jeder Pol (37, 38) in Kontakt entweder mit beiden Treiborganen (34) oder mit nur einem dieser beiden steht.
